# FASCICULE DE BREVET EUROPEEN

(11) **EP 0 869 306 B1**
(45) Date de publication et mention de la délivrance du brevet: **18.07.2001**
(21) Numéro de dépôt: 98400105.7
(22) Date de dépôt: 21.01.1998
(51) Int. Cl.: F16L 33/02

(54) **Collier de serrage**
Rohrklemme
Pipe clamp

(30) Priorité: 21.01.1997 FR 9700571
(43) Date de publication de la demande: 07.10.1998
(73) Titulaire: Calmettes, Lionel, 11430 Gruissan (FR)
(72) Inventeur: Calmettes, Lionel, 11430 Gruissan (FR)
(74) Mandataire: Laget, Jean-Loup

(56) Documents cités:
- EP-A- 0 491 610
- FR-A- 2 523 260
- FR-A- 2 692 322
- FR-A- 2 717 555

## Description

L'invention concerne un collier de serrage et plus particulièrement un collier en deux pièces pour le serrage des tuyaux souples sur des tubes rigides.

Un collier en deux pièces, une ceinture et un pontet, permettant un serrage symétrique par rapport au plan de symétrie axial du collier, est décrit dans le document FR-A-2.717.555.

Dans ce document, le pontet présente des dents d'encliquetage et la ceinture des languettes d'encliquetage, de sorte que les languettes coopèrent avec les dents pour assurer le blocage du collier lorsqu'un outil de serrage rapproche les deux extrémités de la ceinture l'une de l'autre.

Ce collier présente deux inconvénients. Tout d'abord les dents sont prévues sur le pontet assez loin de son plan de symétrie axial pour assurer l'accrochage des languettes de la ceinture. De ce fait, la longueur de ceinture située entre les languettes d'encliquetage est de l'ordre de deux tiers de tour et ses possibilités d'adaptation au diamètre des tuyaux sont relativement limitées. Ensuite, les extrémités de la ceinture doivent être retenues sous une butée de verrouillage, portée par le pontet dans son plan axial de symétrie, pour éviter qu'elles ne soient saillantes vers l'extérieur. Or leur stabilité sous la butée de verrouillage n'est pas assurée.

Afin d'éviter ces inconvénients, la présente invention a pour but de proposer un collier de serrage en deux parties ne présentant ni dents ni languettes d'encliquetage, et dont les extrémités de la ceinture ne risquent pas de s'écarter du plan de symétrie du collier.

L'invention a pour object collier de serrage selon la revendication 1.

Avantageusement:
- chaque extrémité de la partie centrale de la ceinture présente un pli sensiblement radial destiné à constituer une prise de pince,
- la hauteur des plis destinés à constituer des prises de pince est sensiblement égale à cinq fois l'épaisseur de la ceinture,
- le rayon de cambrage des plis destinés à constituer des prises de pince est au moins égal à l'épaisseur de la ceinture,
- deux ondulations supplémentaires, sensiblement diamétralement opposées, sont prévues sur la ceinture pour constituer des réserves de capacité et d'élasticité pour la ceinture,
- les ondulations supplémentaires servent de butée au pontet, lorsque le collier est ouvert, pour maintenir sa position relativement à la ceinture.

D'autres caractéristiques ressortent de la description. qui suit faite avec référence au dessin annexé sur lequel:
- la figure 1 est une vue en perspective d'un premier mode de réalisation du collier selon l'invention, en position fermée ;
- la figure 2 est une vue axiale d'un deuxième mode de réalisation du collier selon l'invention, en position ouverte.

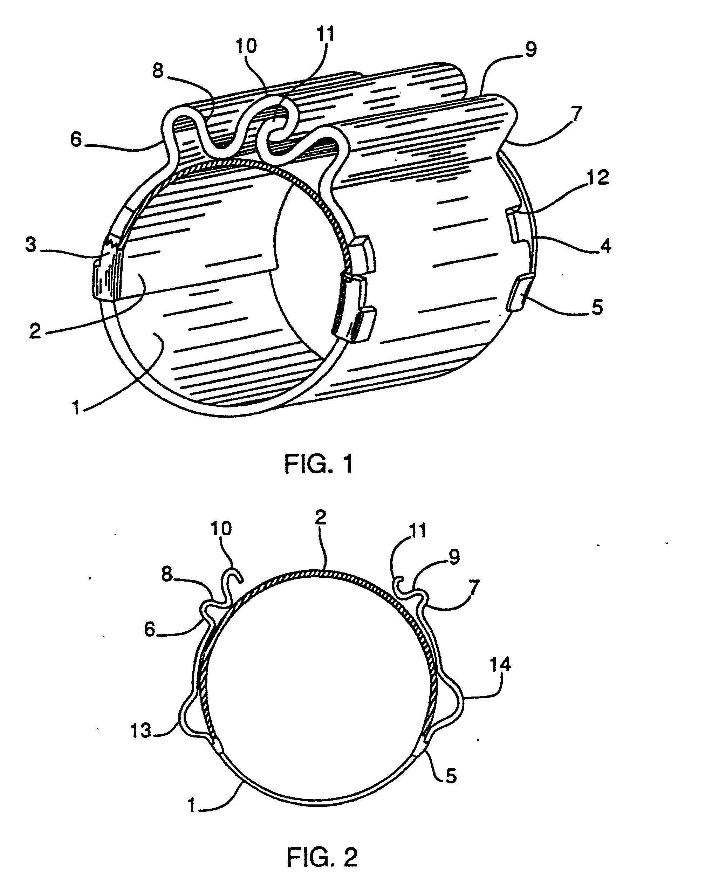

Sur la figure 1, le collier est constitué d'une ceinture 1 et d'un pontet 2. Le pontet 2 est constitué d'une tôle sensiblement semi-cylindrique, lisse, dont les bords extérieurs 3, 4 sont rabattus vers l'extérieur et portent à leurs extrémités des doigts de retenue tels que 5, repliés parallèlement à la surface cylindrique du pontet 2.

La ceinture 1 est constituée à partir d'une bande en acier. Elle se compose d'une partie centrale cylindrique et de parties d'extrémité constituées par des ondulations. Tout d'abord, à chaque extrémité de la partie centrale cylindrique de la ceinture 1, la bande s'écarte sensiblement radialement, puis est repliée vers le pontet 2.

Chaque extrémité de la partie centrale cylindrique de la ceinture 1 porte donc un pli sensiblement radial, constitué d'une première face, respectivement 6, 7, et d'une deuxième face, respectivement 8 et 9.

Les deux parties d'extrémité de la ceinture 1 portent ensuite chacune une ondulation à profil en forme de crochet, respectivement 10 et 11.

Ces ondulations 10, 11 sont en portions de cylindre et sont destinées à s'encliqueter l'une sur l'autre à la fermeture du collier.

Pour permettre la mise en place réciproque du pontet 2 et de la ceinture 1, la ceinture comporte sur ses bords libres, au voisinage des extrémités de la partie centrale, des échancrures telles que 12, susceptibles de laisser passer les doigts de retenue 5 du pontet.

Sur la figure 2, le collier est représenté ouvert, et les mêmes éléments sont identifiés par les mêmes références que sur la figure 1 où le collier est représenté fermé. Par rapport au collier de la figure 1, le mode de réalisation de la figure 2 comporte deux ondulations supplémentaires 13, 14, sensiblement diamétralement opposées, qui constituent des réserves de capacité et d'élasticité pour le collier.

Les plis sensiblement radiaux, disposés aux extrémités de la partie centrale de la ceinture 1, constituent des prises de pince déformables pour effectuer la fermeture du collier. La hauteur de ces prises de pince, mesurée radialement à partir du pontet 2, est sensiblement égale à cinq fois l'épaisseur de la ceinture 1. Le rayon de cambrage des prises de pince est au moins égal à l'épaisseur de la ceinture 1. Ces dimensions permettent de réaliser la ceinture 1 en acier inoxydable ferritique écroui, et non en acier inoxydable austénitique qui est plus cher d'environ 66 %.

Les prises de pince sont déformables élastiquement. Elles sont directement reliées aux ondulations 10 et 11 qui sont en portions de cylindre, ce qui donne à chaque partie d'extrémité de la ceinture 1, un ensemble déformable avec une course élastique importante et suffisante pour un fonctionnement correct du collier.

Ainsi, lorsque le collier est ouvert (figure 2), il est mis en place autour d'un tuyau souple emmanché sur un tube rigide. Une pince est appliquée simultanément à l'extérieur des faces 6 et 7 des plis radiaux constituant prises de pince. Lorsque la pince est serrée, les extrémités de la ceinture 1 se rapprochent jusqu'à ce que le bord libre de l'ondulation 10 franchisse le bord libre de l'ondulation 11 pour assurer leur encliquetage réciproque. La pince est alors ouverte et la ceinture prend sa position permanente de fermeture, la tension de la ceinture étant assurée par les plis radiaux et les ondulations des extrémités de la ceinture 1.

Dans la variante de réalisation de la figure 2, les ondulations supplémentaires 13, 14 ont une triple fonction. Tout d'abord, elles servent de butée aux doigts de retenue 5 du pontet 2, pour maintenir la position relative, représentée sur la figure 2, du pontet 2 et de la ceinture lorsque le collier est ouvert.

Ensuite, elles servent de réserve de capacité au moment de la fermeture du collier, leur déformation élastique donnant plus de facilité à l'opérateur qui manoeuvre la pince avec moins d'effort. Enfin, elles servent de réserve d'élasticité après la fermeture du collier pour mieux permettre à la ceinture de reprendre sa position stable et assurer la répartition des efforts.

Le collier décrit avec référence aux dessins est constitué de deux pièces, le pontet 2 et la ceinture 1, il est pratiquement symétrique par rapport au plan axial passant par la jonction des deux extrémités de la ceinture 1.

Lorsque le collier est fermé, le pontet 2 se développe sur environ la moitié de la surface cylindrique intérieure du collier. De ce fait, la course relative du tuyau serré par le collier et la ceinture 1 est réduite au minimum. De plus, les efforts de serrage sont répartis sur les deux extrémités de la ceinture, ce qui fait que le point médian de la ceinture, situé dans le plan de symétrie du collier, ne subit aucun effort tangentiel de glissement par rapport au tuyau.

Le collier de serrage selon la présente invention est remarquable en ce qu'il réalise une économie de matière par rapport aux colliers existants.

## Revendications

1. Collier de serrage constitué d'un pontet (2) et d'une ceinture (1), disposés chacun sensiblement symétriquement par rapport à un plan axial passant par la jonction des extrémités de la ceinture, la ceinture étant constituée d'une bande en acier et se composant d'une partie centrale en forme de secteur de cylindre et de deux parties d'extrémité constituées par des ondulations, le pontet (2) portant des doigts de retenue (5) pour assurer la liaison réciproque du pontet (2) et de la ceinture (1), caractérisé en ce que lesdites ondulations (10, 11) sont susceptibles de s'encliqueter l'une sur l'autre pour assurer la fermeture du collier.

2. Collier selon la revendication 1, caractérisé en ce que chaque extrémité de la partie centrale de la ceinture présente un pli sensiblement radial (6, 8 ; 7, 9) destiné à constituer une prise de pince.

3. Collier selon la revendication 2, caractérisé en ce que la hauteur des plis destinés à constituer des prises de pince est sensiblement égale à cinq fois l'épaisseur de la ceinture (1).

4. Collier selon la revendication 2, caractérisé en ce que le rayon de cambrage des plis destinés à constituer des prises de pince est au moins égal à l'épaisseur de la ceinture (1).

5. Collier selon la revendication 1, caractérisé en ce que deux ondulations supplémentaires (13, 14), sensiblement diamétralement opposées, sont prévues sur la ceinture (1) pour constituer des réserves de capacité et d'élasticité pour la ceinture.

6. Collier selon la revendication 5, caractérisé en ce que les ondulations supplémentaires (13, 14) servent de butée au pontet (2), lorsque le collier est ouvert, pour maintenir sa position relativement à la ceinture (1).

## Patentansprüche

1. Rohrklemme mit einem Bügel (2) und einem Gurt (1), die jeweils im wesentlichen symmetrisch im Bezug auf eine Axialfläche, die sich durch die Verbindung der Enden des Gurtes erstreckt, angeordnet sind, wobei der Gurt aus einem Stahlband besteht und aus einem Mittelabschnitt mit der Form eines Zylindersektors und zwei Endabschnitten aufgebaut ist, die aus Wellungen bestehen, und der Bügel (2) Haltedaumen (5) trägt, die dazu dienen, die gegenseitige Beziehung des Bügels (2) und des Gurtes (1) sicherzustellen, dadurch gekennzeichnet, daß die Wellungen (10, 11) geeignet sind, sich miteinander zu verrasten um so die Schließung der Klemme sicherzustellen.

2. Klemme nach Anspruch 1, dadurch gekennzeichnet, daß jedes Ende des Mittelabschnitts des Gurtes eine im wesentlichen radial verlaufende Falte (6, 8; 7, 9) aufweist, die dazu bestimmt ist, eine Zangenangriffsfläche zu bilden.

3. Klemme nach Anspruch 2, dadurch gekennzeichnet, daß die Höhe der Falten, die dazu bestimmt sind, als Zangenangriffsflächen zu dienen, im wesentlichen gleich ist der fünffachen Dicke des Gurtes (1).

4. Klemme nach Anspruch 2, dadurch gekennzeichnet, daß der Wölbungsradius der Falten, die als Zangenangriffsflächen zu dienen bestimmt sind, zumindest gleich der Dicke des Gurtes (1) ist.

5. Klemme nach Anspruch 1, dadurch gekennzeichnet, daß zwei zusätzliche Wellungen (13, 14) auf dem Gurt (1) vorgesehen sind, die einander im wesentlichen diametral entgegengesetzt angeordnet sind, um Kapazitäts- und Elastizitätsreserven für den Gurt zu bilden.

6. Klemme nach Anspruch 5, dadurch gekennzeichnet, daß die zusätzlichen Wellungen (13, 14) als Anschlag für den Bügel (2) dienen, während die Klemme offen ist, damit dieser seine Stellung relativ zu dem Gurt (1) aufrechterhält.

## Claims

1. A clamping collar formed of a saddle (2) and of a band (1), each arranged substantially symmetrically relative to an axial plane passing through the junction of the ends of the band, the band being formed of a steel strip and being composed of a central part in the shape of a sector of a cylinder and two end parts formed by undulations, the saddle (2) bearing retaining fingers (5) for ensuring the reciprocal joining of the saddle (2) and of the band (1), characterised in that said undulations (10, 11) are able to engage on each other to close the collar.

2. A collar according to Claim 1, characterised in that each end of the central part of the band has a substantially radial fold (6, 8; 7, 9) intended to form a grip for pincers.

3. A collar according to Claim 2, characterised in that the height of the folds intended to form grips for pincers is substantially equal to five times the thickness of the band (1).

4. A collar according to Claim 2, characterised in that the radius of cambering of the folds intended to form grips for pincers is at least equal to the thickness of the band (1).

5. A collar according to Claim 1, characterised in that two additional, substantially diametrically opposed, undulations (13, 14) are provided on the band (1) to form reserves of capacity and elasticity for the band.

6. A collar according to Claim 5, characterised in that the additional undulations (13, 14) act as a stop for the saddle (2), when the collar is open, in order to maintain its position relative to the band (1).
